# EUROPEAN PATENT APPLICATION

(11) **EP 3 220 225 A1**
(43) Date of publication of application: **20.09.2017**
(21) Application number: 17151991.1
(22) Date of filing: 18.01.2017
(51) Int. Cl.: G05B 19/418, G06F 11/14

(54) **RELAY DEVICE, CONTROL METHOD OF RELAY DEVICE, CONTROL PROGRAM AND RECORDING MEDIUM**

(30) Priority: 14.03.2016 JP 2016049316
(71) Applicant: Omron Corporation, Kyoto 600-8530 (JP)
(72) Inventor: Kitamura, Yasuhiro, Kyoto-shi, Kyoto 600-8530 (JP); Ozaki, Toshiyuki, Kyoto-shi, Kyoto 600-8530 (JP)
(74) Representative: Becker Kurig Straus

(57) **Abstract**

The 10-Link master (1) includes a determination element (103), for determining whether the setting information (20) acquired from the 10-Link device (2) is consistent with the backup data stored in the storage element (11); and a notification element (104), for executing a specified processing for eliminating inconsistency when the determination result is the inconsistency.

## Description

### BACKGROUND OF THE INVENTION

### Field of the Invention

The invention relates to a relay device used for relaying data between a control device and devices in a factory automation (FA) system, and particularly relates to a relay device capable of backing up setting information of the devices.

### Description of Related Art

A general factory automation (FA) system includes a master device (a control device), a slave device (a relay device) and a sensor, etc., and the master device performs operation control of the devices or receives output data of the devices through the slave device. Improvement of the FA system is kept ongoing. For example, a following patent literature 1 discloses a technique to decrease a data communication amount when a parameter setting of a control device (equivalent to the aforementioned slave device) is backed up to a programmable logic controller (equivalent to the aforementioned master device).

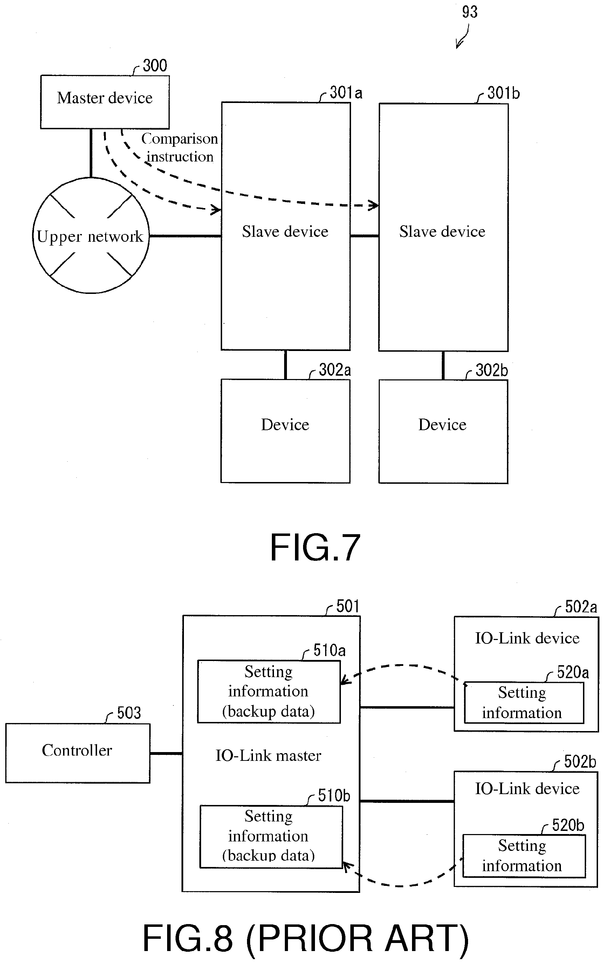

Moreover, in an IO-Link (registered trademark) protocol used in the FA system, a setting information of an IO-Link device can be backed up to an IO-Link master, which is described with reference of FIG. 8. FIG. 8 is a schematic diagram of setting information backup of an IO-Link device in an IO-Link system of a conventional technique.

The IO-Link system includes an IO-Link master 501 (equivalent to the aforementioned slave device), an IO-Link device 502a, an IO-Link device 502b and a controller 503 (equivalent to the aforementioned master device). Moreover, the IO-Link device 502a stores a setting information 520a related to operation of the device, and the IO-Link device 502b also stores a setting information 520b related to operation of the device.

Moreover, as show in FIG. 8, the IO-Link device 502a sends the stored setting information 520a to the IO-Link master 501, and the IO-Link master 501 stores the received setting information 520a as a setting information 510a (backup data). Similarly, the IO-Link device 502b sends the stored setting information 520b to the IO-Link master 501, and the IO-Link master 501 stores the received setting information 520b as a setting information 510b (backup data). By backing up the setting information through such manner, when the IO-Link device 502a or the IO-Link device 502b is replaced, the backup data can be restored to the replaced device, so as to use the setting that is the same to the setting before the replacement to implement operation.

### Existing technical literature

### Patent literature

Patent literature 1: Japan patent publication No. 2014-174616 (published on September 22, 2014)

In case of a communication error, the backup sometimes cannot be normally implemented. Moreover, during the operation process or the IO-Link system, the setting information sometimes is unintentionally changed due to vibration of the IO-Link device, or a user intentionally changes the setting information of the IO-Link device.

In the aforementioned case, the backup data and the setting information may have an inconsistent state, though in the conventional technique, the user is hard to recognize such inconsistent state. Therefore, following problem is encountered: the inconsistent state is not eliminated and the problem is put aside. Moreover, such problem is not limited to the IO-Link system, and is a common problem in the FA system capable of backing up the setting information of the devices to the relay device such as the slave device, etc.

### SUMMARY OF THE INVENTION

The invention implements a relay device capable of automatically detecting the inconsistent state of the backup data and the setting information and eliminating the inconsistent state.

### [Technical means for resolving the problem]

The invention provides a relay device relays data between a control device and a device, where the device is a control object of the control device, and operates according to a setting information. The relay device includes a storage element for storing backup data of the setting information stored in the device; a determination element for determining whether the setting information stored by the device and acquired from the device is consistent with the backup data stored in the storage element; and a processing execution element for executing a specified processing for eliminating the inconsistency when a determination result of the determination element is inconsistency.

According to the aforementioned structure, when the setting information acquired from the device is inconsistent with the backup data, the specified processing for eliminating the inconsistency is executed, so that the inconsistency can be automatically detected and eliminated.

Moreover, the specified processing can be following processing, i.e. any one of a processing of updating the backup data by using the setting information acquired from the device according to user's selection, or a processing of sending the backup data to the device to update the setting information stored in the device.

According to the aforementioned structure, regarding the processing of eliminating the inconsistency, the user may select whether to update the backup data or update the setting information stored by the device, so that the inconsistency can be eliminated according to user's requirement.

Moreover, the specified processing can also be a processing of updating the backup data by using the setting information acquired from the device.

According to the aforementioned structure, through updating of the backup data, the inconsistency can be eliminated in a way of complying with the setting information of the device.

Moreover, the specified processing can also be a processing of sending the backup data to the device to update the setting information stored in the device.

According to the aforementioned structure, through updating of the setting information stored by the device, the inconsistency can be eliminated in a way of complying with the backup data.

Moreover, the device can be an IO-Link device. According to such structure, backup management of the setting information of the IO-Link device can be properly carried on.

Moreover, in order to resolve the above problem, the invention provides a control method of a relay device, the relay device relays data between a control device and a device, and the device is a control object of the control device, and operates according to a setting information, where the relay device includes a storage element, and the storage element stores backup data of the setting information stored in the device, and the control method of the relay device includes a determination step, for determining whether the setting information stored by the device and acquired from the device is consistent with the backup data stored in the storage element; and a processing execution step, for executing a specified processing for eliminating the inconsistency when a determination result of the determination step is inconsistency. According to the control method, the same effect of the relay device is achieved.

Moreover, a control program controlling a computer to execute the aforementioned steps to make the computer to serve as the relay device, and a computer readable recording medium recording the control program are also considered to be within the scope of the invention.

### [Effect of the invention]

According to the present invention, following effect is achieved: the state that the backup data and the setting information is inconsistent can be automatically detected and eliminated.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of a main structure of an IO-Link master 1 according to the embodiment 1 of the invention.
FIG. 2 is a schematic diagram of an IO-Link system including the IO-Link master.
FIG. 3(a) and FIG. 3(b) are schematic diagrams of sending a comparison instruction to the IO-Link master from an upper network.
FIG. 4 is a flowchart illustrating an example of comparison processing of backup data performed by the IO-Link master.
FIG. 5 is a schematic diagram of IO-Link system using cyclic communication to implement a comparison instruction according to an embodiment 2 of the invention.
FIG. 6 is a schematic diagram of an IO-Link system in which a communication function of the IO-Link master with an upper network is separated as a communication coupler according to an embodiment 3 of the invention.
FIG. 7 is a schematic diagram of a factory automation (FA) system including a plurality of slave devices and a master device used for controlling the slave devices according to an embodiment 4 of the invention.
FIG. 8 is a schematic diagram of setting information backup of an IO-Link device in an IO-Link system of a conventional technique.

### DESCRIPTION OF EMBODIMENTS

### (Embodiment 1)

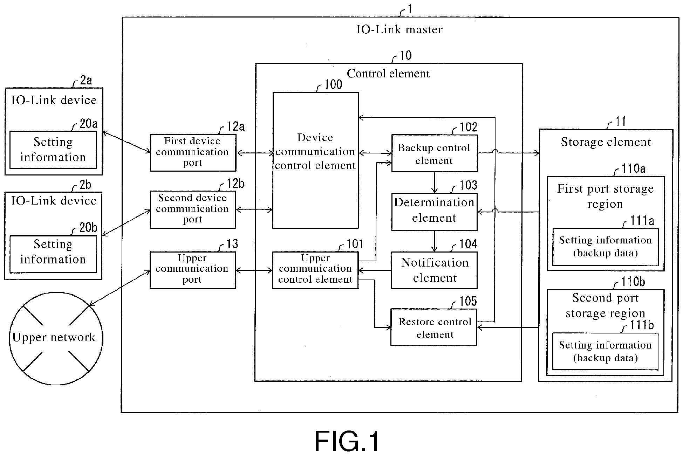

The embodiment 1 of the invention is described below with reference of FIG. 1-FIG. 4.

### (System overview)

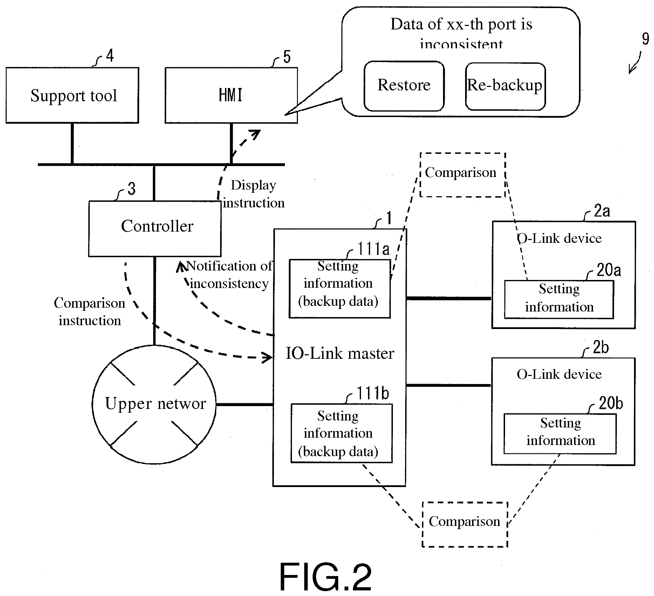

First, an IO-Link system of the embodiment of the invention is described below with reference of FIG. 2. FIG. 2 is a schematic diagram of an IO-Link system 9. The IO-Link system 9 is a factory automation (FA) system. As shown in FIG. 2, the IO-Link system 9 includes an IO-Link master (a relay device) 1, an IO-Link device 2a, an IO-Link device 2b, a controller (control device) 3, a support tool 4 and a human machine interface (HMI) 5. Moreover, when it is unnecessary to distinguish the IO-Link device 2a and the IO-Link device 2b, the two devices are referred to as IO-Link devices 2.

The IO-Link master 1 is a relay device used for relaying data between an upper network including the controller 3 and the IO-Link devices 2, and serves as a slave device of the controller 3 in the IO-Link system 9. In the embodiment of FIG. 2, the IO-Link master 1 is connected to the two IO-Link devices 2, though the IO-Link master 1 can also be connected to three or more IO-Link devices 2. Moreover, the IO-Link master 1 and the IO-Link devices 2 may implement two-way communication.

The IO-Link devices 2 may communicate with the IO-Link master 1 to serve as control objects of the controller 3. The IO-Link devices 2 can be implemented by devices of an output system and devices of an input system. The devices of the input system are, for example, various sensors such as photoelectric sensors or proximity sensors, etc., and the devices of the output system are, for example, actuators or motors, etc. Moreover, conversion devices such as inverters may also serve as the IO-Link devices 2.

The controller 3 is a control device used for controlling the whole IO-Link system 9, which is also referred to as a programmable logic controller (PLC). In the IO-Link system 9, the controller 3 serves as a master device of the IO-Link master 1 to operate.

The support tool 4 is a device connected to the IO-Link system 9, and is used for executing various settings of the IO-Link system 9 such as an operation setting of the IO-Link devices 2. The support tool 4 can be connected to the IO-Link system 9 through the controller 3. The support tool 4 can be implemented by an information processing device such as a personal computer, etc., or a portable information processing device such as a notebook computer, etc.

The HMI 5 is a touch panel type display input device, and a user of the IO-Link system 9 may operate the controller 3 through the HMI 5, or use the HMI 5 to confirm an operation state of the IO-Link system 9.

In the IO-Link system 9 with the aforementioned structure, as shown in FIG. 2, the IO-Link master 1 compares a setting information 111a according to a comparison instruction received from the controller 3. To be specific, the IO-Link master 1 obtains a setting information 20a stored by the IO-Link device 2a from the IO-Link device 2a, and compares the setting information 20a with the setting information 111a, i.e. backup data stored by itself to determine whether they are consistent. Similarly, the IO-Link master 1 obtains a setting information 20b stored by the IO-Link device 2b from the IO-Link device 2b, and compares the setting information 20b with the setting information 111b, i.e. backup data stored by itself to determine whether they are consistent.

Moreover, when it is unnecessary to distinguish the setting information 111a and the setting information 111b, the setting information 111a and the setting information 111b are referred as setting information 111. Similarly, when it is unnecessary to distinguish the setting information 20a and the setting information 20b, the setting information 20a and the setting information 20b are referred as setting information 20. Moreover, the setting information 20 is information representing an operation setting of the IO-Link device 2, and the IO-Link device 2 operates according to the setting information 20. For example, when the IO-Link device 2 is a photoelectric sensor, the setting information 20 of the IO-Link device 2 can be a key lock setting, which specifies whether to lock a setting of a hardware switch of the photoelectric sensor; a lightON/darkON setting, which specifies whether to output a turn-on signal when a light is detected or output the turn-on signal when the light is not detected; and an ON (OFF) delay time setting, etc., which specifies a standby time from when an output condition of an ON signal or an OFF signal is satisfies till the ON signal or the OFF signal is output.

Moreover, when the determination result is inconsistency, the IO-Link master 1 executes a specified processing for eliminating the inconsistency. As shown in FIG. 2, the IO-Link master 1 sends a notification indicating the inconsistency to the controller 3, and the HMI 5 display a specified notification image, such that the user learns that the inconsistency is occurred. Moreover, in the embodiment of FIG. 2, in the notification image displayed by the HMI 5, options indicating two processing of restore and re-backup for eliminating the inconsistency are displayed.

When the user selects the option of restore displayed on the notification image, a restore instruction is sent to the IO-Link master 1 through the HMI 5 and the controller 3. Moreover, the IO-Link master 1 receiving the restore instruction sends the setting information 111 serving as the backup data to the IO-Link device 2 to update the setting information 20 stored by the IO-Link device 2. In this way, the inconsistency can be eliminated in the way of complying with the backup data.

Similarly, when the user selects the option of re-backup displayed on the notification image, a backup data update instruction is sent to the IO-Link master 1 through the HMI 5 and the controller 3. Moreover, the IO-Link master 1 receiving the backup data update instruction uses the setting information 20 acquired from the IO-Link device 2 to update the setting information 111 serving as the backup data. In this way, the inconsistency can be eliminated in the way of complying with the setting information 20 of the current IO-Link device 2.

In this way, in the IO-Link system 9, the inconsistency between the setting information 20 acquired from the IO-Link device 2 and the backup data (the setting information 111) is automatically detected, and in case of the inconsistency, the specified processing for eliminating the inconsistency is executed. Therefore, the inconsistency can be quickly detected and eliminated.

### (About IO-Link)

Regarding the IO-Link, following descriptions are added. The IO-Link standardized as a name of single-drop digital communication interface for small sensors and actuators (SDCI) in an international electrotechnical commission (IEC) 61131-9, and is a standardized technique used for controlling communication between a master serving as a control device (for example, the control device 3) and sensors and actuators, etc. The IO-Link is a new point-to-point serial communication protocol used for communication between a master and a device. Moreover, the device is, for example, a photoelectric sensor or a proximity switch.

The IO-Link is different to a conventional protocol that the ON/OFF signal (1 bit) can only be sent to the master from the device, and is a communication protocol capable of implementing data transceiving (two-way communication) of 32 bytes (256 bits). By connecting the master and the device through the IO-Link, regarding the signal coming from the device that is only capable of receiving binary data such as ON/OFF information, etc., value data of 32 bytes can be acquired. Therefore, in case of the photoelectric sensor, information of light reception amount, detection margin, internal temperature, etc., can be obtained, by which not only the cause of the problem can be identified, a product service life can also be diagnosed, so as to perform threshold change corresponding to the annual deterioration.

By using the IO-Link, automation of device setting and maintenance is implemented. Moreover, by using the IO-Link, master device programming is greatly simplified, so as to implement cost reduction of wiring cables.

The IO-Link system (for example, the IO-Link system 9) using the aforementioned IO-Link is described below. The IO-Link system includes IO-Link devices (which are generally sensors, actuators or a combination thereof, for example, the IO-Link devices 2), a standard three-wire sensor/actuator cable, and an IO-Link master (for example, the IO-Link master 1).

The IO-Link master has one or a plurality of ports (for example, a device communication port 12 described later), and each of the ports can be connected to one IO-Link device. The IO-Link master and the IO-Link devices may implement point-to-point communication. Other than the conventional binary data of the ON/OFF information (1 bit data), information besides the binary data of the ON/OFF information, etc. (data greater than 1 bit), such as device identification information, a device communication property, a device parameter and process/diagnosis data information can be transmitted between the IO-Link master and the IO-Link devices.

Data greater than 1 bit can be transmitted between the IO-Link devices and the IO-Link master. Namely, the IO-Link devices are devices adapted to the IO-Link. Moreover, sensors or actuators other than the IO-Link devices (without transceiving data greater than 1 bit) can also be installed in the IO-Link system.

### (Main structure of the IO-Link master)

Then, the main structure of the IO-Link master is described below with reference of FIG. 1. FIG. 1 is a block diagram of a main structure of the IO-Link master 1. As shown in FIG. 1, the IO-Link master 1 has a control element 10 used for controlling each part of the IO-Link master 1, and a storage element 11 used for storing various data used by the IO-Link master 1. Moreover, the IO-Link master 1 has a first device communication port 12a and a second device communication port 12b serving as communication ports for communicating with the IO-Link devices 2. The IO-Link master 1 has an upper communication port 13 used for communicating with an upper network including the controller 3. Moreover, when it is unnecessary to distinguish the first device communication port 12a and the second device communication port 12b, the first device communication port 12a and the second device communication port 12b are referred to as device communication ports 12. Moreover, the number of the device communication ports 12 can be three or more.

Moreover, the control element 10 includes a device communication control element 100, an upper communication control element 101, a backup control element 102, a determination element 103, a notification element (processing execution element) 104 and a restore control element 105. Moreover, the storage element 11 includes a first port storage region 110a and a second port storage region 110b, where the setting information 111a and the setting information 111b are respectively stored in the aforementioned storage regions. Moreover, when it is unnecessary to distinguish the first port storage region 110a and the second port storage region 110b, the first port storage region 110a and the second port storage region 110b are referred to as port storage regions 110.

The device communication control element 100 controls the communication with the IO-Link devices 2. Moreover, the upper communication control element 101 controls the communication with devices such as the controller 3 included in the upper network. The communication with the upper network can be implemented through Ethernet control automation technology (EtherCAT, trademark).

The backup control element 102 controls a backup of the setting information 20 stored in the IO-Link device 2. To be specific, the backup control element 102 acquires the setting information 20 from the IO-Link device 2, and takes the same as backup data (the setting information 20) for storing to the port storage region 110 corresponding to the IO-Link device 2. Moreover, the backup control element 102 may also perform processing of updating the backup data by using the setting information 20 acquired from the IO-Link device 2 storing the backup data.

The determination element 103 determines whether the setting information 20 acquired from the IO-Link device 2 is consistent with the setting information 111 serving as the backup data and stored in the storage element 11. Moreover, in case that a determination result of the determination element 103 is inconsistency, the notification element 104 notifies the determination result to the upper network.

The restore control element 105 executes a restore processing, i.e. sends the setting information 111 serving as the backup data and stored in the storage element 11 to the IO-Link device 2, so as to update the setting information 20 stored in the IO-Link device 2.

The port storage regions 110 are storage regions respectively set corresponding to each of the device communication ports 12, and the port storage regions 110 store data related to each of the device communication ports 12. To be specific, the first port storage region 110a stores the backup data (the setting information 111a) of the IO-Link device 2a connected to the first device communication port 12a that serves as data related to the first device communication port 12a. Similarly, the second port storage region 110b stores the backup data (the setting information 111b) of the IO-Link device 2b connected to the second device communication port 12b that serves as data related to the second device communication port 12b.

### (Start and backup of the system)

A timing of backup is not particularly specified, for example, the data backup can be performed when the IO-Link system 9 is started. When the IO-Link system 9 is started, each of the devices constructing the IO-Link system 9 are first connected through specified communication cables, such that after the communication connection, initial setting of each of the devices is performed. The initial setting can be implemented through the support tool 4, and when the initial setting is completed, the IO-Link device 2 in a state of storing the setting information 20.

By performing the initial setting, the IO-Link system 9 is in an operable state, and the IO-Link system 9 performs a trail running after the initial setting is completed, so as to confirm whether the whole IO-Link system 9 is in an expected operation state. If the confirmation result has a problem, adjustment for correcting the setting information 20, etc., is performed, and the setting information 20 is backed up when the system achieves a state of running without problem. Moreover, correction of the setting information 20 can be implemented by the support tool 4, or in case that the IO-Link device 2 has an input element, the correction of the setting information 20 can also be implemented by the input element.

The backup is performed by the IO-Link master 1 when a backup instruction is sent to the IO-Link master 1 or the IO-Link devices 2 from the controller 3, the support tool 4 or the HMI 5. Moreover, after the backup is completed, the IO-Link master 1 compares the backup data to confirm whether backup of the setting information of all of the IO-Link devices 2 is normally completed (whether the determination result is not inconsistency). If it is confirmed that the determination result is not inconsistency, the start of the IO-Link system 9 is ended, and the IO-Link system 9 is in the operable state.

Moreover, during a running process of the IO-Link system 9, the user sometimes changes the setting information 20 of the IO-Link device 2 through the input element of the IO-Link device 2, or the setting information 20 is unintentionally changed due to vibration of the IO-Link device 2 in operation. In such case, since the backup data is not consistent with the setting information 20, comparison of the backup data is ideally performed after the start of the IO-Link system 9 is completed.

### (Comparison timing)

In case of the comparison performed just after the backup is ended, the comparison can be automatically executed by the IO-Link master 1 when the backup processing is ended without according to the instruction coming from the upper network. Moreover, regarding the comparison performed after the start of the IO-Link system 9 is completed, the comparison can be automatically executed by the IO-Link master 1 within a specified time period.

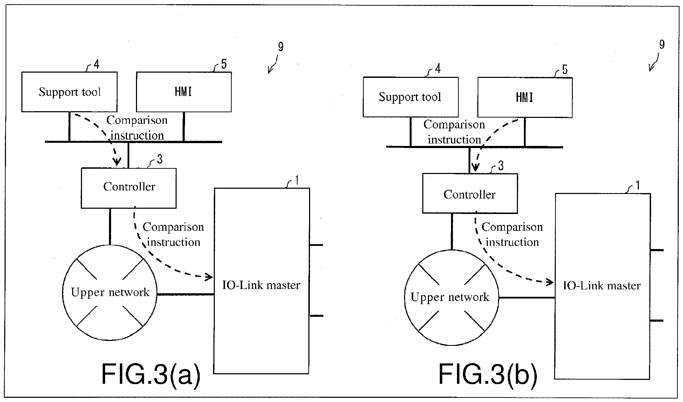

Certainly, the comparison performed by the IO-Link master 1 can be executed according to the instruction coming from the upper network, which is described with reference of FIG. 3(a) and FIG. 3(b). FIG. 3(a) and FIG. 3(b) are schematic diagrams of sending a comparison instruction to the IO-Link master 1 from the upper network.

As shown in FIG. 3(a), the support tool 4 may send the comparison instruction to the IO-Link master 1 through the controller 3. Moreover, as shown in FIG. 3(b), the HMI 5 may send the comparison instruction to the IO-Link master 1 through the controller 3. The control aperiodically carried out in the IO-Link such as the comparison instruction is implemented by sending a command with a specified format that is referred to as a message. Moreover, the message can be produced by the controller 3, or can be produced by the HMI 5 or the support tool 4. For example, in the example of FIG. 3(a), the message of the comparison instruction can be produced by the support tool 4, and the controller 3 relays the message for sending to the IO-Link master 1. Moreover, the controller 3 may also produce the message of the comparison instruction according to the comparison instruction sent to the controller 3 from the support tool 4, and send the message to the IO-Link master 1. The example of FIG. 3(b) is the same.

Moreover, the timing of the comparison processing of the backup data and the provenance of the comparison instruction are not limited to the aforementioned embodiment. For example, in case that the IO-Link master 1 has a wireless communication function, the comparison instruction can be directly sent to the IO-Link master 1 through the wireless communication function.

### (Processing flow)

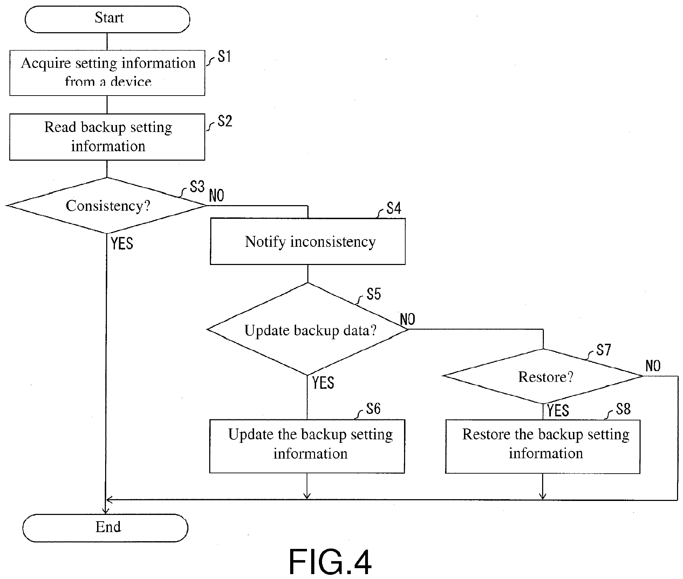

Then, the processing flow executed by the IO-Link master 1 is described below with reference of FIG. 4. FIG. 4 is a flowchart illustrating an example of comparison processing of the backup data performed by the IO-Link master 1 (a control method of a relay device).

First, the backup control element 102 acquires the setting information 20 from each of the IO-Link devices 2 (S1), and outputs the acquired setting information 20 to the determination element 103. Then, the determination element 103 reads the backup setting information 111 (S2), and determines whether the setting information 111 is consistent with the setting information 20 acquired in the step S1 (S3, a determination step). When it is determined to be consistency ("YES" in the step S3), the processing flow is ended. Moreover, the determination result of consistency can be notified to the devices of the upper network such as the controller 3, etc.

On the other hand, when it is determined to be inconsistency in the step S3 ("NO" in the step S3), the determination element 103 outputs the determination result to the notification element 104. Moreover, the notification element 104 sends the determination result of inconsistency and identification information (for example, a port number) of the device communication port 12 corresponding to the inconsistent IO-Link device 2 to the controller 3 (S4, a processing execution step).

The controller 3 receives the notification and displays the notified identification information, a statement indicating inconsistency of the backup data in the device communication port 12, and an option used for eliminating the inconsistency on the HMI 5. Moreover, the object used for displaying the above information is not limited to HMI 5. For example, in the example of FIG. 3(a), the above information can also be displayed on the support tool 4 in case that the comparison instruction is received from the support tool 4, or in case of system start comparison by using the support tool 4.

Moreover, according to the option selected by the user, an update instruction or a restore instruction of the backup data is sent to the IO-Link master 1 from the controller 3. Generation of a message related to the above instruction is similar to the generation of the message of the comparison instruction, which can be implemented in the controller 3, or in the HMI 5 or the support tool 4.

On the other hand, in the IO-Link master 1, the backup control element 102 waits for the update instruction of the backup data (S5), and the restore control element 105 waits for the restore instruction (S7).

Therefore, when the update instruction of the backup data is detected ("YES" in the step S5), the backup control element 102 uses the setting information 20 acquired in the step S1 to update the backup setting information 111 (S6, a processing execution step), and now the comparison processing is ended.

On the other hand, when the update instruction of the backup data is not detected ("NO" in the step S5), and the restore instruction is detected ("YES" in the step S7), the restore control element 105 sends the setting information 111 stored as the backup data to the IO-Link device 2 for restoration (S8, a processing execution step). In this way, the comparison processing is ended. Moreover, in case that the update instruction and the restore instruction of the backup data are not detected within a specified time ("NO" in both of the step S5 and the step S7), the comparison processing is ended.

### (Example of the specified processing for eliminating the inconsistency)

The aforementioned specified processing for eliminating the inconsistency is to notify the determination result of inconsistency to the controller 3, so as to prompt options to the user, and execute update or restore of the backup data according to a selection result. However, the specified processing for eliminating the inconsistency is not limited thereto.

For example, the options are not prompted, and the determination result of inconsistency is simply prompted. Now, the user learning the inconsistency state according to the prompt may determine an operation to be executed, so as to eliminate the inconsistency state. Moreover, any prompted determination result can be adopted as long as the user learns the content of the inconsistent IO-Link device 2, for example, the IO-Link devices serving as the comparison objects and the comparison results thereof can be entirely displayed.

Moreover, the device used for displaying the determination result of inconsistency is not limited to the HMI 5. For example, the determination result of inconsistency can be displayed on a display element of the support tool 4, or can also be displayed on a display element set in the IO-Link master 1.

The determination result of inconsistency can also be notified according to a method besides the image display, for example, to light a light-emitting element, etc. For example, light-emitting diode (LED) elements corresponding to each of the ports can be respectively set in the IO-Link master 1, and the LED element corresponding to the port with the determination result of inconsistency is lighted in a specified lighting pattern, so as to notify the determination result of inconsistency occurred at such port. Besides, various notification methods can also be adopted, for example, to use a sound to implement the notification, or the notification is implemented by sending a message representing the determination result to a specified notification target (for example, a mobile phone).

Moreover, the processing for eliminating the inconsistency can be update processing of the backup data. In this case, the backup control element 102 becomes a processing execution element for executing the specified processing. Moreover, the processing for eliminating the inconsistency can also be a restore processing. In this case the restore control element 105 becomes a processing execution element for executing the specified processing.

In the aforementioned cases, preferably, whether the update processing or the restore processing of the backup data is executed is preset to each of the port. In this way, for example, regarding the IO-Link device 2 in which the setting information 20 is liable to be changed due to the vibration, the restore processing can be automatically executed to cancel the change. On the other hand, regarding the IO-Link device 2 that the user has a high possibility to adjust the setting information 20, the update processing of the backup data can be automatically executed, such that user's adjustment is reflected to the backup data.

### (Embodiment 2)

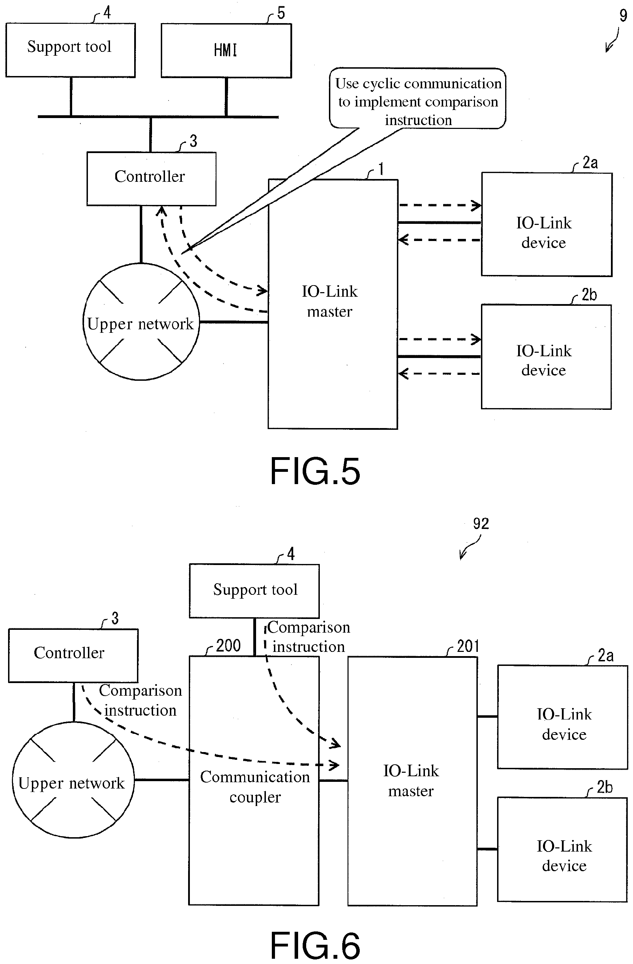

The embodiment 2 of the invention is described with reference of FIG. 5.
FIG. 5 is a schematic diagram of the IO-Link system 9 using cyclic communication to implement the comparison instruction. Moreover, the structures and components similar to that of the aforementioned embodiment are denoted by the same reference numbers, and description thereof is not repeated, which is the same to a later embodiment 3.

In the IO-Link system 9, the cyclic communication is performed in a specified period. To be specific, as shown in FIG. 5, the controller 3 sends cyclic data to the IO-Link master 1, and the IO-Link master 1 sends the cyclic data to each of the IO-Link devices 2. Moreover, the cyclic data is returned back to the controller 3 from each of the IO-Link devices 2 through the IO-Link master 1. In this way, the cyclic data is shared between the devices constructing the IO-Link system 9.

To make the cyclic data to contain the comparison instruction, the IO-Link master 1 may perform the comparison. To be specific, the cyclic data can be pre-stored with a flag corresponding to the comparison instruction, and by using the controller 3 to perform ON/OFF switch to the flag, the comparison can be performed when the flag is switched on.

### (Embodiment 3)

The embodiment 3 of the invention is described with reference of FIG. 6.
FIG. 6 is a schematic diagram of an IO-Link system 92 in which a communication function of the IO-Link master with the upper network is separated as a communication coupler.

The IO-Link system 92 of FIG. 6 has the same function with that of the IO-Link system 9, and a difference therebetween is that the IO-Link master 1 of the IO-Link system 9 is replaced by a communication coupler 200 and an IO-Link master 201.

The communication coupler 200 is a relay device used for relaying the communication between the upper network and the IO-Link master 201. The communication coupler 200 has a communication port equivalent to the upper communication port 13 (referring to FIG. 1) of the IO-Link master 1, and has a communication port used for communicating with the IO-Link master 201. Moreover, the communication coupler 200 has a communication control element equivalent to the upper communication control element 101 (referring to FIG. 1) of the IO-Link master 1, and relays communication between the devices included in the upper network and the IO-Link master 201 through the communication control element.

Besides that the IO-Link master 201 has a communication port used for communicating with the communication coupler 200 by replacing the upper communication port 13 (referring to FIG. 1), the IO-Link master 201 has the same structure with that of the IO-Link master 1.

In the IO-Link system 92, similar to the aforementioned IO-Link system 9, the controller 3 sends the comparison instruction, and the comparison instruction is received by the IO-Link master 201 through the communication coupler 200. Moreover, the comparison processing performed after reception of the comparison instruction is the same with that of the IO-Link master 1, which is not repeated.

Moreover, when the communication coupler 200 has an interface for connecting the support tool 4, as shown in FIG. 6, the comparison instruction can also be sent to the communication coupler 200 from the support tool 4 through the interface. In this case, the comparison instruction is transferred to the IO-Link master 201 from the communication coupler 200. Moreover, when the IO-Link master 201 has an interface for connecting the support tool 4, the comparison instruction can also be sent to the IO-Link master 201 from the support tool 4 through the interface. Therefore, in the IO-Link system 92, similar to the embodiment 2, cyclic communication can also be used to send the comparison instruction.

Moreover, at least one of the storage element of the backup data, the determination element used for comparing the backup data, and the processing execution element used for executing the specified processing for eliminating the inconsistency when the determination result is inconsistency can also be set to the communication coupler 200. In this way, the related processing can be shared by the communication coupler 200 and the IO-Link master 201.

### (Embodiment 4)

The embodiment 4 of the invention is described with reference of FIG. 7.
FIG. 7 is a schematic diagram of a FA system 93 including a plurality of slave devices and a master device used for controlling the slave devices. The FA system 93 of FIG. 7 has the same functions with that of the IO-Link system 9, though it is not a system complying with the IO-Link protocol. As shown in FIG. 7, the FA system 93 includes a mater device 300, a slave device 301a, a slave device 301b and a device 302a, a device 302b. Moreover, when it is unnecessary to distinguish the slave device 301a and the slave device 301b, the slave device 301a and the slave device 301b are referred to as slave devices 301. Similarly, when it is unnecessary to distinguish the device 302a and the device 302b, the device 302a and the device 302b are referred to as devices 302.

The master device 300 is a control device used for controlling each of the slave devices 301, and is equivalent to the controller 3 of the aforementioned embodiments. Moreover, the slave devices 301 operate based on the control of the master device 300, and are relay devices used for relaying data between the master device 300 and the devices 302. The slave devices 301 are devices equivalent to the IO-Link master 1 of the aforementioned embodiments, and may implement two-way communication with the devices 302. A difference between the IO-Link master 1 and the slave devices 301 is that the number of the communication port of the slave device 301 used for communicating with the device 302 is one. The devices 302 are equivalent to the IO-Link devices 2 of the aforementioned embodiments, for example, besides the devices of the input system such as sensors, etc., devices of the output system such as actuators, etc., can also be used as the devices 302. Such system is, for example, constructed by using the EtherCAT.

Moreover, similar to the IO-Link master 1, the slave device 301 also includes a storage element of the backup data, a determination element used for comparing the backup data, and a processing execution element used for executing the specified processing for eliminating the inconsistency when the determination result is inconsistency. Therefore, the slave device 301 compares the backup data according to the comparison instruction coming from the master device 300, and executes the specified processing for eliminating the inconsistency when the comparison result is inconsistency.

Moreover, as described above, the number of the communication port of each of the slave devices 301 used for communicating with the device 302 is one, in the embodiment of FIG. 7, each of the slave devices 301 is connected to one device 302. However, the communication port of the slave device 301 can be connected to a plurality of devices 302 in series (another device is connected to the device 302 connected to the communication port of the slave device 301). In this case, the slave device 301 may respectively back up and compare the setting information of the devices 302.

### (Variation example)

In the embodiment 1-the embodiment 3, the FA systems using the IO-Link are taken as examples for description, though any FA system capable of implementing device backup in the slave device and implementing the two-way communication between the devices and the slave device is applicable, for example, the FA system using CC-Link, etc.

### (Implementation through software)

A control block (especially the elements included in the control element 10) of the IO-Link master 1 can be implemented through a logic circuit (hardware) formed on an integrated circuit (IC (chip)), and can also be implemented by a central processing unit (CPU) through software.

In the later case, the IO-Link master 1 has a CPU adapted to execute commands of software (i.e. programs) capable of implementing various functions, a read only memory (ROM) or a storage device (referred to as a recording medium) recording the programs and various data that can be read by a computer (or the CPU), a random access memory (RAM) for spreading the programs, etc. Moreover, the programs recorded in the recording medium can be read and executed by the computer (or the CPU) to achieve the purpose of the invention. The recording medium can be implemented by a non-temporary physical medium, for example, a tape, a disk, a card, a semiconductor memory, a programmable logic circuit, etc. Moreover, the program can be provided to the computer through any transmission medium (a communication network or a radio wave, etc.) capable of transmitting the program. In addition, the data embodying the program and embedded in carriers can be implemented in form of signals through teletransmission. Moreover, the control blocks of the IO-Link master 201, the communication coupler 200 and the slave devices 301, etc. can be implemented in the same way.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A relay device (1), adapted to relay data between a control device (3, 300) and a device (2, 302), wherein the device (2, 302) is a control object of the control device (3, 300), and operates according to a setting information (20), the relay device (1) comprising:
a storage element (11), storing backup data (111) of the setting information (20) stored in the device (2, 302);
a determination element (103), determining whether the setting information (20) stored in the device (2, 302) and acquired from the device (2, 302) is consistent with the backup data (111) stored in the storage element (11); and
a processing execution element (102, 104, 105), executing a specified processing for eliminating inconsistency when a determination result of the determination element (103) is the inconsistency.

2. The relay device (1) as claimed in claim 1, wherein the specified processing is processing, i.e. any one of a processing of updating the backup data (111) by using the setting information (20) acquired from the device (2, 302) according to user's selection, or a processing of sending the backup data (111) to the device (2, 302) to update the setting information (20) stored in the device (2, 302).

3. The relay device (1) as claimed in claim 1, wherein the specified processing is a processing of updating the backup data (111) by using the setting information (20) acquired from the device (2, 302).

4. The relay device (1) as claimed in claim 1, wherein the specified processing is a processing of sending the backup data (111) to the device (2, 302) to update the setting information (20) stored in the device (2, 302).

5. The relay device (1) as claimed in any one of the claims 1-4, wherein the device (2, 302) can be an IO-Link device.

6. A control method of a relay device (1), wherein the relay device (1) relays data between a control device (3, 300) and a device (2, 302), and the device (2, 302) is a control object of the control device (3, 300), and operates according to a setting information (20), the control method of the relay device (1) is **characterized in that**:
the relay device (1) comprises a storage element (11), and the storage element (11) stores backup data (111) of the setting information (20) stored in the device (2, 302),
the control method of the relay device (1) comprising:
a determination step (S3), determining whether the setting information (20) stored by the device (2, 302) and acquired from the device (2, 302) is consistent with the backup data (111) stored in the storage element (11); and
a processing execution step (S4, S6, S8), executing a specified processing for eliminating inconsistency when a determination result of the determination step (S3) is inconsistency.

7. A control program, adapted to control a computer to execute the steps of
the claim 6, such that the computer functions as the relay device (1).

8. A recording medium, recording a control program as claimed in claim 7
and being computer readable.
